# FASCICULE DE BREVET EUROPEEN

(11) **EP 0 439 383 B1**
(45) Date de publication et mention de la délivrance du brevet: **22.11.1995**
(21) Numéro de dépôt: 91400062.5
(22) Date de dépôt: 11.01.1991
(51) Int. Cl.: G11B 11/10, G11B 7/14

(54) **Dispositif de lecture de segments oblongs d'un support d'enregistrement en défilement**
Vorrichtung zum Lesen länglicher Segmente aus einem sich bewegenden Aufzeichnungsträger
Device to read oblong segments from a moving recording medium

(30) Priorité: 18.01.1990 FR 9000546
(43) Date de publication de la demande: 31.07.1991
(73) Titulaire: THOMSON-CSF, 75008 Paris (FR)
(72) Inventeur: Lehureau, Jean-Claude, F-92045 Paris La Défense (FR); Neubert, Sophie, F-92045 Paris La Défense (FR)
(74) Mandataire: Chaverneff, Vladimir

(56) Documents cités:
- EP-A- 0 092 420
- EP-A- 0 094 852
- WO-A-81/01217
- GB-A- 2 025 731
- GB-A- 2 120 001

## Description

La présente invention se rapporte à un dispositif de lecture de segments oblongs d'un support en défilement.

Actuellement, la lecture de bandes magnétiques est réalisée par des têtes de lecture soit du type magnétique, soit du type magnéto-optique. Les têtes magnétiques ne conviennent généralement que pour la lecture de bandes magnétiques à grande vitesse de défilement, alors que les têtes du type magnéto-optique conviennent pour de faibles vitesses de défilement de ces bandes magnétiques.

On sait capter les informations fournies par le transducteur (en général un grenat) d'une telle tête magnéto-optique en envoyant un rayon lumineux sur ce transducteur et en analysant à l'aide d'un capteur photo-électrique le rayon réfléchi. La partie optique d'un tel système capteur est encombrante et ne convient pas pour des têtes multipistes dont la zone à lire a une forme oblongue.

On connaît d'après le document WO-A-81/01217 un dispositif de lecture de piste fluorescente de film cinéma, comportant une source ultraviolette et un dispositif d'imagerie à deux miroirs sphériques associés à une lentille de déflexion, ce dispositif d'imagerie nécessitant une lentille de correction d'aberrations et produisant une point image d'un point à lire.

La présente invention a pour objet un dispositif de lecture de segments oblongs d'un support en défilement, dispositif qui soit le plus compact possible et présente le moins possible d'aberrations optiques et une grande résolution (environ 1µm dans le sens de la largeur du segment oblong).

Le dispositif de lecture conforme à l'invention est du type à source lumineuse et un dispositif d'imagerie catoptique à miroirs sphériques concave et convexe concentriques, avec un dispositif détecteur et il est caractérisé en ce que la lumière de la source est focalisée à l'aide d'une première lentille cylindrique de façon à illuminer les segments oblongs à lire, que l'axe longitudinal de la première lentille est parallèle à l'axe du segment oblong, qu'il comporte sur le trajet du faisceau réfléchi par l'objet illuminé une lentille de correction d'astigmatisme et en ce que la forme et les dimensions de la surface utile du détecteur sont sensiblement les mêmes que celles du segment à lire, et par le fait que le dispositif d'imagerie a un grandissement de -1 et que le rapport des rayons du miroir convexe et du miroir concave est 1/2.

La présente invention sera mieux comprise à la lecture de la description détaillée d'un mode de réalisation, pris comme exemple non limitatif et illustré par le dessin annexé, sur lequel:
- la figure 1 est un schéma du dispositif d'imagerie catoptique utilisé par l'invention, et
- la figure 2 est un schéma d'un mode de réalisation du dispositif de lecture conforme à l'invention.

L'invention est décrite ci-dessous en référence à la lecture de pistes d'une bande magnétique multipiste, mais il est bien entendu qu'elle n'est pas limitée à une telle application et peut être mise en oeuvre pour la lecture dynamique d'informations enregistrées sur divers supports en déplacement relatif par rapport au dispositif de lecture, par exemple pour la lecture de films cinéma dans un système de télécinéma (transformation en signaux vidéo), ou pour la lecture de codes divers (codes optiques tels que les codes à barres ou les codes à points de programmes ou d'instructions pour ordinateurs) imprimés sur des bandes opaques ou transparentes, etc.

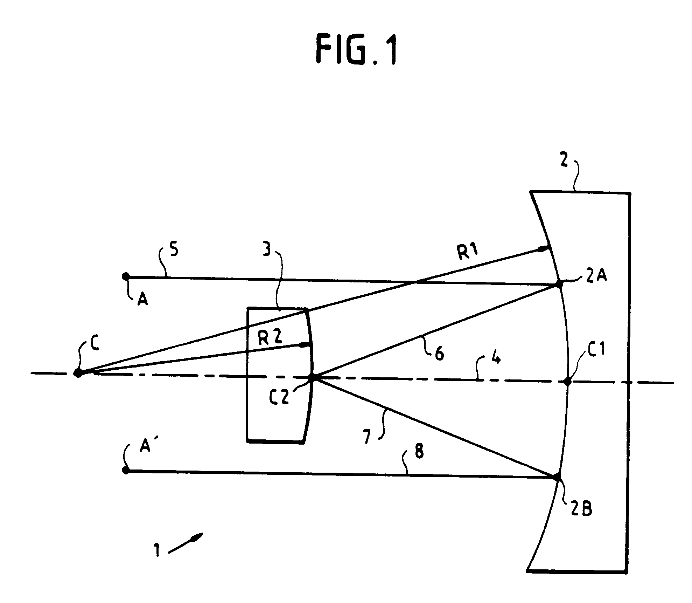

On a représenté en figure 1 le schéma simplifié du dispositif catoptique d'imagerie 1 utilisé dans le dispositif de lecture de l'invention. Le dispositif 1 comporte essentiellement deux miroirs sphériques concentriques 2 et 3. Le miroir 2 est concave et le miroir 3 est convexe et de plus petit diamètre d'ouverture que le miroir 2. Le rayon R2 du miroir 3 est, de préférence, égal à la moitié du rayon R1 du miroir 2. Les miroirs 2 et 3 sont disposés de façon que leur centre commun C soit aligné avec les sommets respectifs C1,C2 de leurs surfaces spéculaires et situés sur ces surfaces. La droite 4 passant par C,C1,C2 est ainsi l'axe optique commun des miroirs 2,3. Dans un mode de réalisation de l'invention, R1 est d'environ 20 mm.

L'objet ou surface à imager par le dispositif 1 est placé en un point A décalé par rapport à l'axe 4 de façon qu'un rayon lumineux 5 issu de A et parallèle à l'axe 4 ne soit pas occulté par le miroir 2 et puisse être réfléchi par le miroir 2. Ce décalage est, dans le présent exemple (R1 = 20 mm environ, diamètre du miroir 20 mm = et diamètre du miroir 3 = 8 mm), d'environ 6 à 7 mm.

Après réflexion en 2A sur le miroir du rayon 5, le rayon réfléchi 6 arrive au centre C2 du miroir 3. Le rayon réfléchi 7 issu de C2 se réfléchit en 2B, sur le miroir 2 et donne un rayon émergent 8 symétrique du rayon 5 par rapport à l'axe 4.

On dispose le capteur photoélectrique en A′ symétrique de A par rapport à l'axe 4.

Si la relation précitée R1 = 2.R2 est respectée, le dispositif d'imagerie 1 est stigmatique. Son grandissement est égal à -1 quelle que soit la distance de A au miroir 2, et sa résolution est limitée par le diamètre du miroir 3 faisant office de diaphragme.

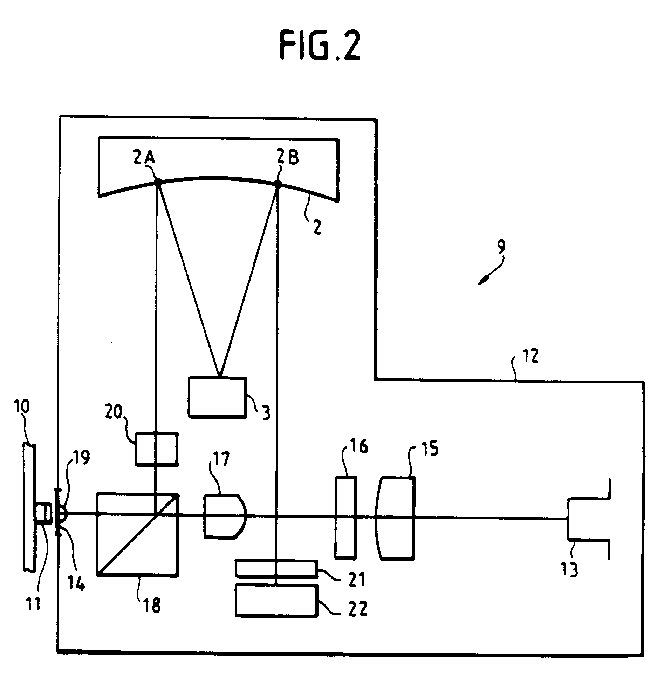

On a représenté en figure 2 un mode de réalisation d'un dispositif 9 de lecture de bande magnétique 10, incorporant le dispositif d'imagerie 1. Ce dispositif 9 est placé contre un transducteur magnéto-optique 11 ou à proximité de ce dernier. Le transducteur 11 est de tout type approprié (utilisant en particulier l'effet Faraday et/ou l'effet Kerr). L'angle d'incidence des rayons envoyés sur le transducteur 11 peut être fonction de l'effet magnéto-optique mis en oeuvre. Dans l'exemple représenté en figure 2, le dispositif de lecture 9 est placé dans un boîtier 12 ayant, en coupe axiale, la forme d'un "L", mais il est bien entendu que sa forme peut être quelconque. A l'intérieur du boîtier 12, près de l'une de ses extrémités, on dispose, dans l'axe d'une branche du "L", une source lumineuse 13. Cette source 13 est par exemple une diode laser polarisée. La longueur d'onde de son rayonnement est par exemple d'environ 750 à 800 nm. Le rayonnement issu de la source 13 est dirigé, selon l'axe de la branche du "L" dans laquelle est disposée cette source, vers une fenêtre 14 formée ou rapportée sur la paroi du boîtier 12 en vis-à-vis de la source 13.

La fenêtre 14 est, bien entendu, en matériau transparent à la longueur d'onde utilisée, et le transducteur magnéto-optique 11 est à proximité de cette fenêtre.

Le rayonnement issu de la source 13 traverse respectivement une lentille sphérique 15 de collimation, le cas échéant (si la source 13 n'est pas polarisée) un polariseur 16, une lentille cylindrique 17 de focalisation, un cube séparateur 18 (ou une lame à faces parallèles disposée à 45°), et une micro-lentille cylindrique 19 fixée sur la fenêtre 14. Toutefois cette micro-lentille n'est pas nécessaire dans tous les cas d'utilisation. Selon un mode de réalisation, la micro-lentille 19 est réalisée à partir d'un tronçon de fibre optique, d'une longueur de 10 à 20 mm environ, fendu selon un plan passant par son axe. Le rayon de la fibre optique utilisée est, de préférence, inférieur à 20 µm environ.

Le dispositif 9 et le transducteur 11 sont disposés de façon que les rayons réfléchis par ce transducteur passent par la micro-lentille 19 et soient dirigés par le séparateur 18 vers le miroir 2. Sur le trajet des rayons, entre le séparateur 18 et le miroir 2, on dispose une lentille cylindrique 20 de correction d'astigmatisme. Les rayons issus du miroir 2 après réflexion sur le miroir 3 sont recueillis par un analyseur 21 et un détecteur 22 qui est réalisé par exemple à l'aide d'une barrette CCD. Le détecteur 22 est disposé de telle façon que la distance entre sa surface sensible et le point 2B du miroir 2 soit égale à la distance entre la surface de réflexion du transducteur 11 et le point 2A du miroir 2. Bien entendu, les trajets entre, d'une part, la source 13 et la lentille 19, et d'autre part le miroir 2 et le détecteur 22, peuvent ne pas être rectilignes, et on peut disposer sur ces trajets des miroirs, afin de réduire encore l'encombrement du dispositif de lecture.

Le positionnement et le rayon de courbure de la micro-lentille 19 sont déterminés pour augmenter la résolution selon la direction perpendiculaire à la longueur de la lentille. Son axe longitudinal est parallèle à l'axe de la zone oblongue à lire. Cette lentille 19 crée de l'astigmatisme puisque l'image virtuelle qu'elle produit est plus éloignée selon sa largeur que selon sa longueur. La correction d'astigmatisme est réalisée par la lentille cylindrique 20, qui peut être de faible puissance (focale d'environ 300 mm par exemple). Si cette lentille 20 est divergente, sa direction efficace est la même que celle de la micro-lentille 19. Si elle est convergente, sa direction efficace est perpendiculaire à celle de la micro-lentille.

Si l'on néglige l'influence du désaxage des rayons 5 et 8 (figure 1), on peut démontrer que le dispositif d'imagerie 1 est dépourvu d'aberrations. La condition de stigmatisme étant réalisée, l'aberration sphérique est nulle et le système ne présente pas d'astigmatisme. En toute rigueur, les faibles aberrations affectant ce dispositif d'imagerie sont dues au désaxage précité, qui crée de l'astigmatisme.

Un calcul par spot diagramme du dispositif de lecture décrit ci-dessus montre que l'on peut imager une ligne de 10 mm avec une distorsion de 0,1 % et une courbure de champ inférieure à 300 µm. Le rayon R1 du miroir 2 peut alors être de 20 mm environ. Le calcul par spot diagramme montre également qu'un excentrement du miroir 3 par rapport au miroir 2 de l'ordre de 300 µm engendre une distorsion de 0,2 % sur un champ de 10 mm. Un écart de positionnement sur l'axe optique 4 du miroir 3 de 500 µm engendre une distorsion de l'image de l'ordre de 0,2 %. Ces calculs montrent que la tolérance de positionnement des miroirs est compatible avec des tolérances mécaniques pouvant être tenues.

Pour l'application précitée à la lecture de bandes magnétiques multipistes à l'aide d'un transducteur magnéto-optique, l'objet ou zone à imager peut être considéré comme un réseau déphasant. La polarisation du faisceau réfléchi par cet objet tourne d'un angle de ± φ selon la magnétisation de la bande. Le dispositif décrit ci-dessus permet de visualiser cette variation de polarisation. La diode laser, constituant dans le présent exemple, la source 13, est orientée de façon que le petit axe du faisceau qu'elle produit soit orienté parallèlement à la grande direction de la micro-lentille 19. Dans le cas où la source n'est pas polarisée, et que l'on utilise donc le polariseur 16, ce polariseur permet d'éviter les fluctuations éventuelles de la polarisation de cette source. La polarisation du faisceau arrivant sur la micro-lentille 19 est perpendiculaire à son axe longitudinal. L'analyseur 21 est orienté à 45° par exemple par rapport à la direction des rayons et permet de détecter la modulation due aux variations de magnétisation de la bande lue. On peut remplacer le dispositif analyseur 21 par un polariseur orienté à 45° et un cube séparateur de polarisation.

## Revendications

1. Dispositif de lecture de segments d'un support en défilement, comportant une source lumineuse (13), et un dispositif d'imagerie catoptique (1) à miroirs sphériques concave (2) et convexe (3) concentriques, et un dispositif détecteur (22), caractérisé en ce que la lumière de la source est focalisée à l'aide d'une première lentille cylindrique (17,19) de façon à illuminer les segments oblongs à lire, que l'axe longitudinal de la première lentille est parallèle à l'axe du segment oblong, qu'il comporte sur le trajet du faisceau réfléchi par l'objet illuminé une lentille (20) de correction d'astigmatisme et en ce que la forme et les dimensions de la surface utile du détecteur sont sensiblement les mêmes que celles du segment à lire, et par le fait que le dispositif d'imagerie a un grandissement de -1 et que le rapport des rayons du miroir convexe et du miroir concave est 1/2.

2. Dispositif selon la revendication 1, caractérisé par le fait que la lentille de correction d'astigmatisme est une lentille cylindrique qui est divergente ou efficace suivant une direction perpendiculaire à celle de la première lentille cylindrique.

3. Dispositif selon l'une des revendications précédentes, caractérisé par le fait que la première lentille cylindrique est un système de lentilles cylindriques comprenant une lentille (19) à la sortie du faisceau d'illumination qui est réalisée à partir d'un tronçon de fibre optique.

4. Dispositif selon l'une des revendications précédentes, caractérisé par le fait que l'objet à imager est la surface réfléchissante d'un transducteur magnéto-optique de tête de lecture de bande magnétique multipiste et en ce que la source lumineuse est polarisée.

5. Dispositif selon l'une des revendications 1 à 4, caractérisé par le fait que l'objet à imager est la surface d'un film utilisé dans un système de télécinéma.

## Patentansprüche

1. Vorrichtung zum Lesen von Segmenten eines bewegten Informationsträgers, mit einer Lichtquelle (13) und einer katoptrischen Abbildungsvorrichtung (1), die konzentrische, konkave und konvexe sphärische Spiegel (2, 3) enthält, und mit einer Detektorvorrichtung (22), dadurch gekennzeichnet, daß das Licht der Quelle mit Hilfe einer ersten zylindrischen Linse (17, 19) so fokussiert wird, daß es die länglichen zu lesenden Segmente beleuchtet, daß die Längsachse der ersten Linse parallel zur Achse des länglichen Segments angeordnet ist, daß die Vorrichtung im Verlauf des vom beleuchteten Gegenstand reflektierten Strahls eine Linse (20) zur Korrektur des Astigmatismus enthält, daß die Form und die Abmessungen der wirksamen Oberfläche des Detektors im wesentlichen denen des zu lesenden Segments gleichen, daß die Abbildungsvorrichtung eine Vergrößerung von -1 besitzt und daß das Verhältnis der Radien des konvexen Spiegels und des konkaven Spiegels den Wert 1/2 hat.

2. Vorrichtung nach Anspruch 1, dadurch gekennzeichnet, daß die Linse zur Korrektur des Astigmatismus eine zylindrische Linse ist, die divergierend wirkt oder gemäß einer Richtung senkrecht zu der der ersten Zylinderlinse wirksam ist.

3. Vorrichtung nach einem der vorhergehenden Ansprüche, dadurch gekennzeichnet, daß die erste Zylinderlinse ein System von Zylinderlinsen bildet, zu dem eine Linse (19) am Ausgang des Beleuchtungsstrahls gehört, die aus einem Lichtfaserabschnitt gebildet wird.

4. Vorrichtung nach einem der vorhergehenden Ansprüche, dadurch gekennzeichnet, daß der abzubildende Gegenstand die reflektierende Oberfläche eines magneto-optischen Transduktors eines Kopfs zum Lesen eines Mehrspurmagnetbandes ist und daß die Lichtquelle polarisiert ist.

5. Vorrichtung nach einem der Ansprüche 1 bis 4, dadurch gekennzeichnet, daß der abzubildende Gegenstand die Oberfläche eines in einem Telekino verwendeten Films ist.

## Claims

1. Device for reading segments of a moving medium, including a light source (13), and a catadioptic imaging device (1) having concentric concave (2) and convex (3) spherical mirrors, and a detector device (22), characterized in that the light from the source is focused using a first cylindrical lens (17,19) so as to illuminate the oblong segments to be read, that the longitudinal axis of the first lens is parallel to the axis of the oblong segment, that it includes, in the path of the beam reflected by the illuminated object, an astigmatism-correcting lens (20) and in that the shape and dimensions of the working surface of the detector are substantially the same as those of the segment to be read, and by the fact that the imaging device has a magnification of -1 and that the ratio of the radii of the convex mirror and the concave mirror is 1/2.

2. Device according to Claim 1, characterized by the fact that the stigmatism-correcting lens is a cylindrical lens which is divergent or effective along a direction perpendicular to that of the first cylindrical lens.

3. Device according to either of the preceding claims, characterized by the fact that the first cylindrical lens is a system of cylindrical lenses comprising a lens (19), at the exit of the illuminating beam, which is made from a section of optical fibre.

4. Device according to one of the preceding claims, characterized by the fact that the object to be imaged is the reflective surface of a magnetooptic transducer of a head for reading a multitrack magnetic tape and in that the light source is polarized.

5. Device according to one of Claims 1 to 4, characterized by the fact that the object to be imaged is the surface of a film used in a telecine system.
